Europäisches Patentamt

European Patent Office

Office européen des brevets

(11) Numéro de publication: **0 223 660**
**A1**

## (12) DEMANDE DE BREVET EUROPEEN

(21) Numéro de dépôt: **86402300.7**

(22) Date de dépôt: **15.10.86**

(51) Int. Cl.⁴: **B 05 B 15/04**
**B 04 C 5/00**

(30) Priorité: **17.10.85 FR 8515406**

(43) Date de publication de la demande:
**27.05.87 Bulletin 87/22**

(84) Etats contractants désignés:
**BE CH DE ES FR GB IT LI NL SE**

(71) Demandeur: **SAMES S.A.**
**Z.I.R.S.T. Chemin de Malacher**
**F-38240 Meylan (FR)**

(72) Inventeur: **Correard, Jean-Yves**
**30 Place J.B. Clément**
**F-38400 Saint Martin d'Heres (FR)**

(74) Mandataire: **CABINET BONNET-THIRION**
**95 Boulevard Beaumarchais**
**F-75003 Paris (FR)**

(54) **Installation de poudrage de pièces à cabine de poudrage maintenue en dépression.**

(57) Installation de poudrage électrostatique comportant un séparateur de type "CYCLONE" dans le circuit d'extraction d'air permettant de maintenir la zone de poudrage en dépression.

Selon l'invention, le séparateur (12) est monté de façon non conventionnelle, par exemple verticalement avec sa partie tronconique (12b), en haut, ce qui permet de simplifier le réseau de gaines (14a) entre les différents éléments de l'installation et de bénéficier d'une sortie en hauteur de la poudre récupérée par le séparateur (12), permettant son transport sans apport d'énergie supplémentaire.

Application aux installations de peinture par poudrage de peinture thermofusible.

FIG. 2

EP 0 223 660 A1

## Description

"Installation de poudrage de pièces à cabine de poudrage maintenue en dépression"

L'invention se rapporte à une installation de poudrage de pièces, mettant en oeuvre notamment le poudrage électrostatique et concerne plus particulièrement le montage des séparateurs air-poudre intégrés à des moyens d'aspiration d'air permettant de maintenir la cabine de poudrage en dépression.

Une installation de poudrage électrostatique dans laquelle des pièces à traiter sont recouvertes d'une poudre de peinture thermofusible avant d'être acheminées vers un four, comporte généralement une cabine où s'effectue la projection de poudre sur lesdites pièces, des moyens de récupération de la poudre qui ne s'est pas déposée sur les pièces, et des moyens d'extraction d'air dont le rôle est de maintenir la zone de traitement en dépression. Les moyens d'extraction d'air aspirent en fait un mélange air-poudre et de ce fait, ils sont souvent associés aux moyens de récupération de la poudre ou comportent eux-mêmes des moyens de séparation dont le rôle est d'épurer l'air extrait, avant de le rejeter à l'atmosphère. Pour ce faire, on utilise souvent un ou plusieurs séparateurs aérodynamiques, plus connus dans la technique sous le nom de "CYCLONE". Un tel séparateur se compose extérieurement d'une partie cylindrique munie d'une entrée latérale du mélange air-poudre, en communication avec la cabine et d'une sortie d'air épuré, axiale, ainsi que d'une partie tronconique, prolongeant axialement ladite partie cylindrique et comportant une sortie de poudre, axiale, à l'opposé de ladite sortie d'air épuré. Cette dernière se prolonge à l'intérieur de l'extracteur par un conduit axial débouchant sensiblement au milieu dudit extracteur. Le mélange air-poudre est introduit tangentiellement à une certaine vitesse, dans le séparateur, ce qui engendre un état tourbillonnaire ayant pour résultat, sous l'effet de la force centrifuge, de rejeter la poudre vers la paroi interne du séparateur, l'air épuré étant évacué par le conduit axial. La poudre concentrée au voisinage de la paroi interne du séparateur est évacuée, comme mentionée ci-dessus, par l'extrémité axiale de la partie tronconique.

On a jusqu'à présent considéré qu'il était indispensible de disposer le séparateur verticalement avec la partie tronconique en bas pour que la poudre retombe par gravité le long de la paroi interne de la partie conique, formant trémie de récupération.

L'invention découle d'une analyse plus poussée des phénomènes mis en jeu dans un tel type de séparateur "CYCLONE", qui a permis de mettre en évidence que, pour la granulométrie de produits pulvérulents généralement employés dans les installations de poudrage décrites ci-dessus, la gravité n'intervenait pas ou pratiquement pas sur le cheminement des particules de poudre à l'intérieur du "CYCLONE", la poudre étant en fait entraînée vers la sortie axiale de la partie tronconique par les tourbillons engendrés à l'intérieur du séparateur.

A partir de cette constatation, l'invention propose d'envisager d'autres positions de montage du séparateur, dans plusieurs types d'installations, plus avantageuses sous divers aspects, notamment pour faciliter le transport de la poudre récupérée à l'extérieur du séparateur et pour simplifier le réseau de gaînes reliant le séparateur aux autres parties de l'installation.

Dans cet esprit, l'invention concerne essentiellement une installation de poudrage de pièces comportant une cabine de poudrage dans laquelle transitent les pièces à traiter et un circuit d'extraction de l'air de ladite cabine, destiné à maintenir la zone de poudrage en dépression, ce circuit d'extraction comportant au moins un séparateur du type "CYCLONE" composé de façon connue d'une partie cylindrique munie d'une entrée latérale de mélange air-poudre, en communication avec ladite cabine et d'une sortie d'air épuré, axiale, ainsi que d'une partie tronconique prolongeant axialement ladite partie cylindrique et comportant une sortie de poudre, axiale, à l'opposé de ladite sortie d'air épuré, caractérisé en ce que ledit séparateur est positionné de façon que sa sortie de poudre soit approximativement à un niveau supérieur ou égal au niveau de son entrée latérale précitée.

Le plus souvent, le séparateur sera disposé soit verticalement avec sa partie tronconique en haut, soit horizontalement.

L'invention sera mieux comprise et d'autres avantages de celle-ci apparaîtront plus clairement à la lumière de la description qui va suivre de plusieurs installations conformes à son principe, donnée uniquement à titre d'exemple et faite en référence aux dessins schématiques annexés dans lesquels:

- la figure 1 est une vue schématique en élévation d'une installation de poudrage conventionnelle;

- la figure 2 est une vue schématique de la même installation, après les modifications apportées conformément à l'invention;

- la figure 3 est une vue schématique en élévation et en coupe d'une autre installation conforme au principe de l'invention;

- la figure 4 est une vue de dessus de la même installation;

- la figure 5 est une vue schématique en élévation et en coupe d'une autre installation conforme au principe de l'invention;

- la figure 6 est une vue schématique suivant une coupe VI-VI de la figure 5;

- les figures 7 à 9 illustrent des variantes possibles de la sortie de poudre du séparateur; et

- la figure 10 illustre une variante de l'entrée du séparateur.

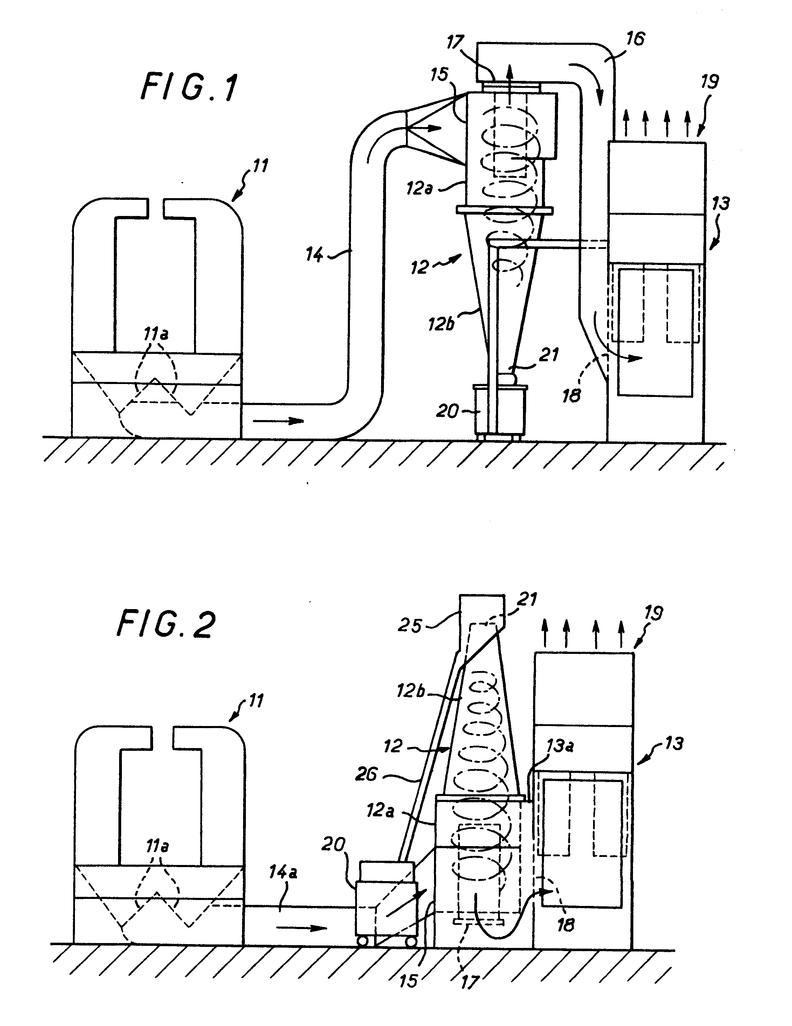

En se reportant plus particulièrement à la figure 1 relative à l'art antérieur, on a représenté une installation de poudrage électrostatique comportant essentiellement une cabine 11 dans laquelle transitent les objets à recouvrir et un circuit d'extraction d'air comprenant successivement un séparateur de type "CYCLONE" 12 communiquant avec la cabine et un caisson de filtrage 13 à cartouches. Les moyens d'aspiration de l'air ne sont pas représentés. Le circuit d'extraction d'air comprend une première gaîne 14 connectée entre la cabine 11 et l'entrée latérale 15 de mélange air-poudre située au voisinage de l'extrémité supérieure de la partie cylindrique 12a du séparateur ainsi qu'une seconde gaîne 16 connectée entre la sortie d'air épuré 17, axiale, et l'entrée inférieure 18 du caisson de filtrage 13. La sortie 19 de ce caisson de filtrage 13, par laquelle l'air complètement épuré est rejeté à l'extérieur, est située à la partie supérieure de celui-ci. Ladite première gaîne 14 s'ouvre sous un plancher en caillebotis de la cabine 11 en étant connectée à des trémies de récupération de poudre 11a agencées sous ce plancher.

Comme le montre le dessin, le séparateur 12 et le caisson de filtrage 13 sont des ensembles encombrants, particulièrement en hauteur (près de 5 mètres de haut) de sorte que les gaînes 14 et 16 ont aussi des longueurs appréciables, surtout si on considère le montage conventionnel du séparateur, conforme à la figure 1, c'est-à-dire avec la partie tronconique 12b en bas. Ce montage traditionnel du séparateur oblige en outre à recueillir la poudre au niveau du sol, ici dans un réservoir 20 (dans lequel débouche la sortie de poudre 21 dudit séparateur) ce qui nécessite une dépense d'énergie supplémentaire et surtout des dispositifs annexes et/ou de la main-d'oeuvre pour le recyclage ou le transport de la poudre récupérée.

La figure 2, qui représente la même installation modifiée conformément au principe de l'invention et dans laquelle les mêmes éléments portent les mêmes références numériques, montre tous les avantages qui peuvent résulter de la mise en oeuvre de l'invention.

Dans l'installation modifiée, le circuit d'extraction d'air est le même, avec les éléments dans le même ordre, à savoir le séparateur 12 puis le caisson de filtrage 13, mais le séparateur 12 est cette fois monté verticalement avec la partie tronconique 12b en haut. Dès lors, la gaîne 14a reliant la partie inférieure de la cabine 11 à l'entrée latérale 15 du séparateur est beaucoup plus courte et essentiellement horizontale, ce qui est favorable tant du point de vue du prix de revient de l'installation que de son encombrement général.

Par ailleurs, la gaîne 16 peut être purement et simplement supprimée car le séparateur 12 est alors installé à proximité immédiate du caisson de filtrage 13 sur un prolongement latéral 13a de celui-ci, de façon que la sortie d'air épuré 17 communique directement avec l'entrée 18, ledit prolongement latéral 13a formant une enceinte étanche isolant la sortie 17 et l'entrée 18 du milieu extérieur.

La sortie de poudre 21, cette fois au sommet du séparateur, débouche dans une enceinte close 25 de diamètre supérieur au diamètre de sortie dudit séparateur. Le fond de l'enceinte close se situe à un niveau inférieur à celui de la sortie du séparateur. On définit ainsi une zone de détente où la poudre peut s'accumuler par gravité. Selon l'exemple, l'enceinte 25 a la forme d'une trémie connectée par un conduit incliné 26 au réservoir 20 de stockage de la poudre récupérée. Il est à noter qu'avec cet agencement on bénéficie du fait que la sortie 21 se trouve à près de 5 mètres du sol ce qui permet d'envisager le transport de la poudre vers un autre lieu de stockage ou vers des moyens de recyclage, par gravité, c'est-à-dire sans apport d'énergie nécessitant l'adjonction d'un dispositif supplémentaire. On peut fluidiser le fond de la trémie par une arrivée d'air de façon à faciliter l'évacuation de la poudre.

Dans le type d'installation décrit en référence à la figure 2, on voit que les moyens de récupération de poudre et les moyens de mise en dépression de la zone de poudrage sont combinés puisque la totalité de la poudre évacuée de la cabine est transportée par l'air extrait en permanence de celle-ci pour maintenir la dépression. La plus grande partie de la poudre transportée de cette façon est récupérée au niveau du séparateur 12 et s'accumule, selon l'exemple, dans le réservoir 20. Une faible proportion de poudre est retenue dans le caisson de filtrage 13. Si on désire effectuer un changement de couleur de la poudre, il suffit de remplacer le réservoir 20 puisque la poudre accumulée dans celui-ci peut être réutilisée. En revanche, on ne cherche pas à réutiliser la faible proportion de poudre qui s'accumule dans le caisson de filtrage 13 de sorte que celui-ci n'a pas besoin d'être nettoyé ou remplacé à chaque changement de couleur.

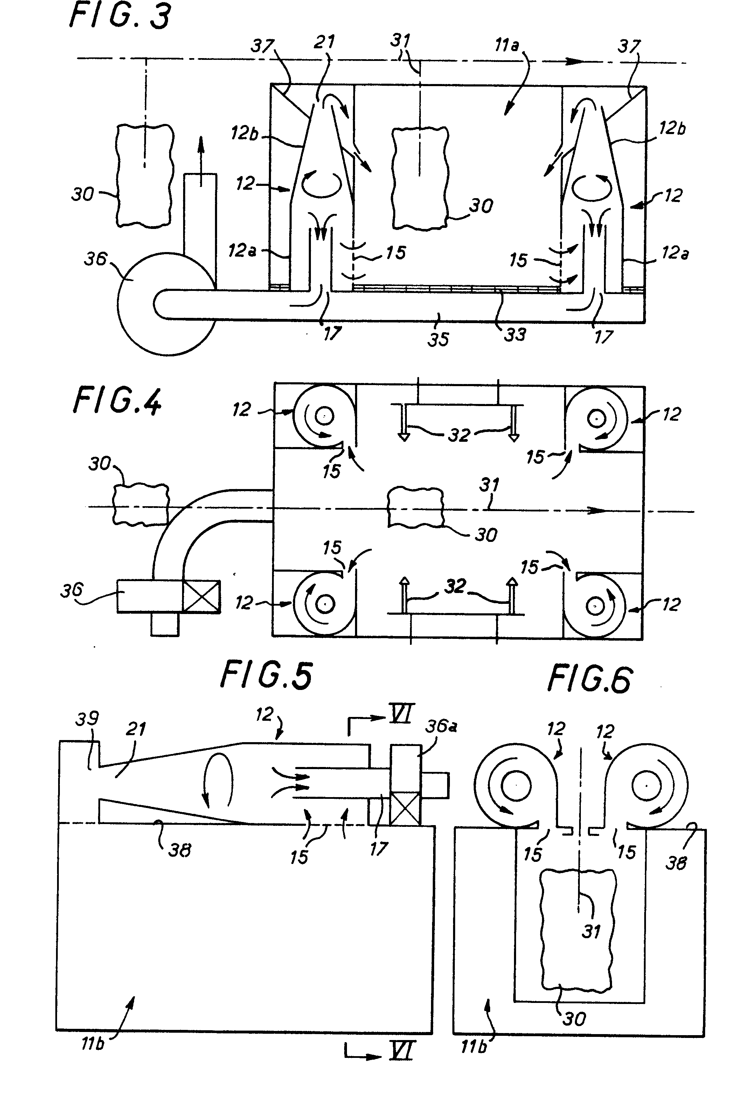

Les figures 3 et 4 illustrent un autre type d'installation dans laquelle le circuit d'extraction d'air comporte quatre séparateurs 12 de type "CYCLONE" installés verticalement dans les coins de la cabine 11a avec leur partie tronconique 12b en haut. Les pièces à recouvrir 30, accrochées à un convoyeur 31, traversent la cabine longitudinalement pour recevoir de la poudre projetée par les projecteurs 32. A poudre non déposée sur ces pièces est, pour une partie, récupérée mécaniquement par un système connu à tapis ou râclettes, non représenté, disposé sur le plancher 33 de la cabine. Les sorties 17 d'air épuré des séparateurs sont connectées, par un réseau de gaîne horizontal 35, situé sous le plancher 33 de la cabine, à un extracteur 36 dont la sortie peut éventuellement être reliée à un caisson de filtrage (non représenté) du même genre que celui de la figure 1. L'entrée latérale 15 de mélange air-poudre de chaque séparateur 12 ouvre directement dans la cabine, à la partie inférieure de celle-ci. La sortie 21 de poudre de chaque séparateur s'ouvre à la partie supérieure de la cabine dans une trémie 37 dont la sortie, selon l'exemple, débouche directement dans la cabine. Ainsi, la poudre séparée de l'air extrait retombe par gravité dans la cabine pour être récupérée par le système à tapis ou râclettes.

De préférence, cependant, les sorties des trémies 37 seront connectées à des conduits de récupération de poudre, non représentées, pour que celle-ci puisse être directement acheminée vers des moyens de stockage ou de recyclage.

On voit que, comme dans l'exemple précédent, l'installation bénéficie de deux avantages importants, à savoir: d'une part un réseau de gaînes 35 simple et peu encombrant puisque presque entièrement situé sous la cabine et d'autre part des sorties de poudre en hauteur, permettant, si nécessaire, d'acheminer cette poudre vers un lieu de stockage ou des moyens de recyclage éloignés, sans dispositif supplémentaire.

Les figures 5 et 6 illustrent une autre variante possible dans laquelle deux séparateurs 12 de type "CYCLONE" sont disposés horizontalement et reposent sur le plafond 38 de la cabine 11b, de part et d'autre du convoyeur 31, portant les pièces à recouvrir 30. L'entrée latérale 15 du mélange air-poudre de chaque séparateur débouche directement de la cabine, au travers du plafond 38. Les sorties d'air épuré 17 sont connectées à un extracteur 36a lui-même installé sur le plafond de la cabine 11b. Les sorties de poudre 21 des deux séparateurs débouchent directement dans la cabine par l'intermédiaire de caissons de raccordement 39. Le fonctionnement est le même que celui de l'installation des figures 3 et 4, la cabine étant par ailleurs équipée d'un système à tapis ou râclettes (non représenté).

Il est à noter que ce type d'installation s'accommode mieux d'un déversement dans la cabine de la poudre fournie par les séparateurs 12 car le mélange air-poudre extrait à la partie supérieure de la cabine est moins concentré en poudre que dans le cas de l'installation des figures 3 et 4.

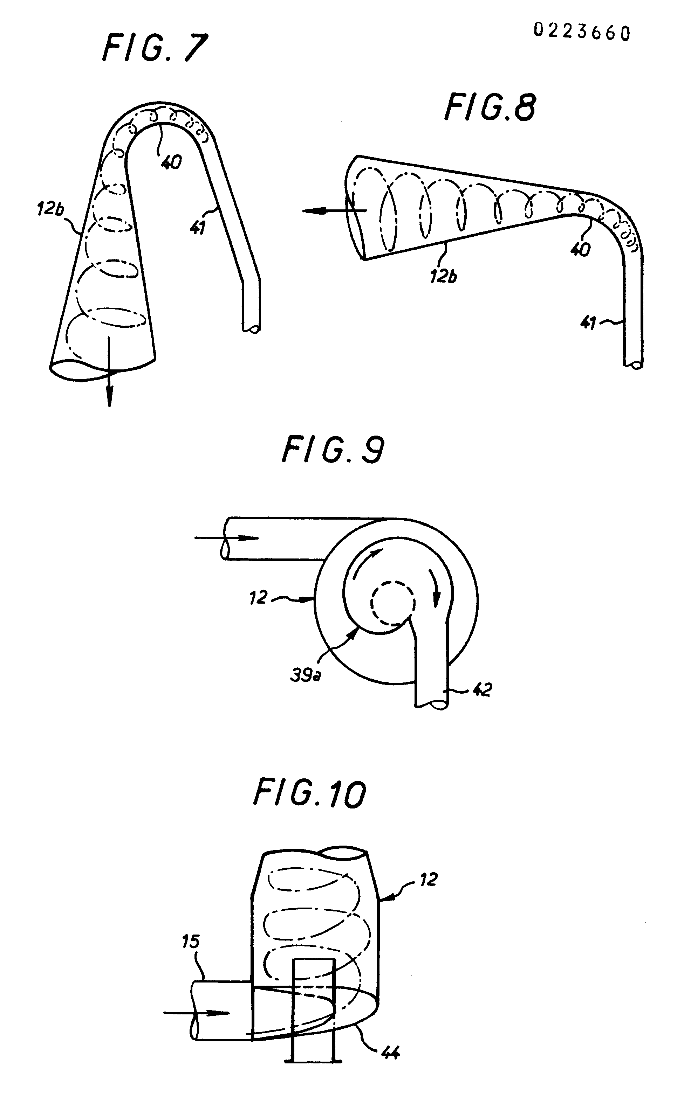

Les figures 7 et 8 illustrent d'autres agencements dans lesquels la récupération du produit peut se faire sans interposer de caisson de décantation à la sortie de poudre du séparateur. Il faut alors que l'extrémité de la partie tronconique 12b se prolonge en décrivant un coude de section progressivement décroissante 40 en s'éloignant de ladite sortie de poudre, avant de déboucher dans un conduit cylindrique 41 de pente suffisante qui constitue une zone de détente où la poudre peut s'écouler par gravité. On évite ainsi la création d'une zone d'accumulation de poudre relativement difficile à nettoyer. Ceci est avantageux lorsqu'on veut réaliser un changement de couleur. En effet, le tourbillon de mélange air-poudre se poursuit dans tout le coude 40, c'est-à-dire tant que la section de passage diminue. Les parois internes du séparateur et du coude restent donc toujours propres.

Comme le montre la figure 9, les caissons 39 peuvent avantageusement présenter la forme d'un conduit enroulé en spirale 39a perpendiculairement à l'axe du séparateur et connecté à la sortie du séparateur, ladite spirale se déroulant de l'orifice vers l'extérieur dans le même sens que le mouvement tourbillonnaire à l'intérieur du séparateur. Ce mouvement tourbillonnaire se poursuit donc dans la spirale jusqu'à une sortie 42 par laquelle la poudre peut s'écouler par gravité. On obtient donc les mêmes avantages que dans le cas des figures 7 et 8 ainsi qu'un gain de place appréciable.

Enfin, on a constaté qu'on pouvait améliorer le rendement du séparateur dans une position conforme à l'invention en agençant l'entrée latérale 15 au niveau de la paroi de fond inférieure du séparateur et de préférence (figure 10) en conformant cette paroi sous forme d'une rampe hélicoïdale 44 s'enroulant sur un tour environ à partir de l'entrée 15, dans le sens du mouvement tourbillonnaire à l'intérieur du séparateur, autour du conduit 17. On évite ainsi la création d'une zone de turbulence à la partie inférieure du séparateur.

## Revendications

1- Installation de poudrage de pièces, comportant une cabine de poudrage (11) dans laquelle transitent des pièces à traiter et un circuit d'extraction de l'air de ladite cabine, destiné à maintenir la zone de poudrage en dépression, ce circuit d'extraction comportant au moins un séparateur du type "CYCLONE" (12) composé, de façon connue, d'une partie cylindrique (12a) munie d'une entrée latérale (15) de mélange air-poudre en communication avec ladite cabine et d'une sortie d'air épuré (17), axiale, ainsi que d'une partie tronconique (12b) prolongeant axialement ladite partie cylindrique et comportant une sortie de poudre (21), axiale, à l'opposé de ladite sortie d'air épuré, caractérisé en ce que ledit séparateur est positionné de façon que sa sortie de poudre (21) soit approximativement à un niveau supérieur ou égal au niveau de son entrée latérale (15) précitée.

2- Installation selon la revendication 1, caractérisé en ce que ledit séparateur (12) est disposé verticalement avec sa partie tronconique (12b) en haut.

3- Installation selon la revendication 2, caractérisée en ce qu'elle comprend, de façon connue en soi, outre ladite cabine et ledit séparateur, un caisson de filtrage (13) comportant à sa partie supérieure une sortie d'évacuation à l'air libre (19), caractérisée en ce que ledit séparateur (12) est installé à proximité dudit caisson de filtrage sur un prolongement latéral (13a) de celui-ci, de façon que sa sortie d'air épuré (17) communique directement avec une entrée inférieure (18) dudit caisson de filtrage.

4- Installation selon la revendication 2 ou 3, caractérisée en ce que ladite sortie de poudre (21) débouche dans une enceinte (25) de section plus large que celle de ladite sortie et connectée à des moyens de stockage et/ou de recyclage.

5- Installation selon l'une des revendications 2 à 4, caractérisée en ce que ladite entrée latérale (15) de mélange air-poudre est reliée à la partie inférieure de ladite cabine par une gaîne (14a) essentiellement horizontale.

6- Installation selon la revendication 2, caractérisée en ce que la cabine comporte au moins un séparateur (12) de type "CYCLONE", en ce que la sortie d'air épuré (17) de ce dernier est reliée à des moyens d'aspiration (36) par une gaîne (35) essentiellement horizontale, passant de préférence sous le plancher (33) de ladite cabine, ladite entrée latérale (15) de mélange air-poudre dudit séparateur ouvrant directement dans ladite cabine.

7- Installation selon la revendication 1, caractérisée en ce que ledit séparateur (12) est disposé horizontalement (figure 5).

8- Installation selon la revendication 7, caractérisée en ce que ledit séparateur repose sur le plafond (38) de ladite cabine et que son entrée latérale (15) de mélange air-poudre débouche directement dans ladite cabine au travers dudit plafond.

9- Installation selon l'une des revendications 1 à 3, caractérisée en ce que l'extrémité de la sortie de poudre se prolonge par un coude de section progressivement décroissante (40).

10- Installation selon l'une des revendications 7 ou 8 caractérisée en ce que la sortie de poudre dudit séparateur débouche dans un conduit enroulé en spirale (39a).

11- Installation selon la revendication 1, caractérisée en ce que l'entrée latérale (15) est située au niveau de la paroi de fond inférieure dudit séparateur.

12- Installation selon la revendication 1, caractérisée en ce que la paroi de fond (44) dudit séparateur a la forme d'une rampe sensiblement hélicoïdale s'enroulant autour de la sortie d'air épuré (17).

FIG.1

FIG.2

**FIG. 3**

**FIG.4**

**FIG.5**

**FIG.6**

FIG. 7

FIG.8

0223660

FIG. 9

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 100 932  (ESB ELEKTROSTATISCHE SPRÜH- UND BESCHICHTUNGSANLAGEN G.F. VÖHRINGER GmbH) <br> * Pages 6-10; figures 1,4 * | 1-7 | B 05 B    15/04 <br> B 04 C     5/00 |
| Y | US-A-3 166 496  (KELSALL) <br> * Colonne 2, lignes 44-58; figure 2 * | 1-6 | |
| Y | BE-A-  526 735  (STAMICARBON) | 1,7 | |
| A | US-A-3 379 308  (TAKESHI HORIUCHI) <br> * Colonne 1, ligne 49  -  colonne 2, ligne 9; figure 1 * | 1,2 | |

DOMAINES TECHNIQUES RECHERCHES (Int. Cl.4)

B 05 B
B 04 C
B 03 B

Le présent rapport de recherche a été établi pour toutes les revendications

| Lieu de la recherche | Date d'achèvement de la recherche | Examinateur |
|---|---|---|
| LA HAYE | 22-01-1987 | WOHLRAPP R.G. |